# FASCICULE DE BREVET EUROPEEN

(11) **EP 0 718 253 B1**
(45) Date de publication et mention de la délivrance du brevet: **03.06.1998**
(21) Numéro de dépôt: 95402866.8
(22) Date de dépôt: 19.12.1995
(51) Int. Cl.: C04B 37/00, C04B 37/02

(54) **Composition et procédé de brasage d'une céramique comprenant de l'alumine**
Lötzusammensetzung und -verfahren für eine Aluminiumoxidhaltige Keramik
Brazing composition and process for an alumina containing ceramic

(30) Priorité: 21.12.1994 FR 9415400
(43) Date de publication de la demande: 26.06.1996
(73) Titulaire: COMMISSARIAT A L'ENERGIE ATOMIQUE, 75015 Paris (FR)
(72) Inventeur: Chaumat, Gilles, F-38170 Seyssinet (FR); Lemoine, Patrick, F-38100 Grenoble (FR); Gasse, Adrien, 38400 Saint-Martin d'Hères (FR)
(74) Mandataire: Ilgart, Jean-Christophe

(56) Documents cités:
- EP-A- 0 100 835
- US-A- 3 813 759

## Description

L'invention a pour sujet une utilisation d'une composition de brasage pour une céramique comprenant de l'alumine à une autre céramique ou à un métal, et des procédés utilisant cette composition.

Parmi les nombreux genres de céramique, on peut distinguer celles qui comprennent de l'alumine, comme la mullite ou la cordiérite, ainsi que l'alumine pure elle-même. Quand de tels produits doivent être assemblés à d'autres céramiques ou à des métaux, le nombre de modes d'assemblages possibles est limité car le soudage ordinaire, qui implique une fusion locale des pièces soudées, n'est pas possible avec une céramique et le collage est exclu si l'assemblage doit être chauffé par la suite. On doit donc recourir à un procédé de brasage.

Une famille de ces procédés repose sur l'utilisation d'une pression pour unir les pièces : on peut citer la diffusion en phase solide, réalisée en pressant les surfaces de joint l'une sur l'autre, et la compression isostatique à chaud. Mais la première de ces techniques n'est pas possible pour toutes les formes de joint et la seconde est coûteuse et prend du temps, pendant lequel l'aspect granulométrique de la matière soumise à la compression pourrait être altéré.

On est donc amené à s'intéresser aux procédés de brasage où la fusion d'un corps intermédiaire joue le rôle essentiel. Il faut que la brasure adhère aux deux pièces, et on constate que le choix de compositions admissibles pour l'alumine et les alliages à base d'alumine est réduit. Trois corps sont essentiellement connus pour favoriser le mouillage et l'adhérence des brasures sur l'alumine : il s'agit du titane, du zirconium et du hafnium. Le brasage le plus fréquent est alors produit en fondant une composition enrichie en ces corps favorables sur l'alumine, à une température où l'alumine reste solide, ou en déposant d'abord une couche de ces corps sur l'alumine par un dépôt physique ou chimique en phase de vapeur avant d'appliquer la composition de brasure.

Mais l'adhérence de ces corps à l'alumine provient d'une réaction chimique produisant des composés fragiles tels que l'oxyde de titane et créant parfois une porosité à la surface de joint. On peut donc craindre que la résistance de la brasuré à la fissuration et à la rupture ne soit notablement réduite. Les corps envisagés sont en outre très sensibles à l'oxygène, ce qui interdit de réaliser le brasage dans une atmosphère normale et oblige à utiliser des fours spéciaux, généralement sous vide.

Ce même inconvénient de sensibilité à l'oxygène existe pour d'autres procédés qui ont déjà été proposés, tels que l'application d'une pâte de molybdène et de manganèse sur la céramique recuite à 1500° pour créer un verre puis la métallisation avec une couche de nickel-palladium sur la céramique, avant de procéder au brasage avec une composition à base d'argent (décrit dans l'article "Microstructure and Seal Strength Relation in the Molybdenium-Manganese Glass Metallization of Alumina Ceramics" de White et Kramer, paru dans Materials Science and Engineering, 75 (1985), pp.207-213) ; ou l'utilisation d'une composition à base d'un alliage de nickel, d'aluminium et de carbone (brevet américain 4 596 354).

Un intérêt de l'invention est de permettre de réaliser un brasage convenable et résistant et si on le désire, sous une pression partielle d'oxygène. On y parvient par une utilisation nouvelle d'une composition, composée d'un metal choisi parmi le cobalt, le platine, l'argent et le palladium ou d'un alliage de ces métaux qui ont la propriété commune de ne pas réagir chimiquement avec l'alumine, et surtout de silicium, corps qui n'a jamais été apparemment proposé pour cette application. L'invention repose sur la découverte que le silicium ne mouille pas l'alumine aux températures relativement basses, mais que son comportement change à partir de 1100°C et plus franchement à partir de 1200°C, car il mouille alors très bien l'alumine et adhère à elle.

Quand les deux pièces assemblées sont en matières suffisamment réfractaire, c'est-à-dire qu'elles résistent aux températures sectionnées, le brasage peut être fait de la façon la plus simple, en intercalant la composition de brasure entre les pièces puis en chauffant.

Les alliages de silicium et des métaux mentionnés ont des températures de fusion comprises en général entre 800°C et 1400°C mais qui varient fortement avec la composition de l'alliage. Il est donc facile de trouver un alliage convenable pour les pièces à unir en fonction de leur nature et des températures à atteindre.

La composition de brasure peut être choisie assez librement, car même une faible teneur de silicium suffit : comme il ne réagit pas avec l'alumine, il ne disparaît pas pendant le brasage et maintient le mouillage sur la pièce. L'opération ne dure d'ailleurs que quelques minutes. Le silicium offre encore à la composition une bonne résistance à la corrosion et en particulier à l'oxydation car une couche de silice produit une passivation de la brasure. On constate enfin que la qualité de la brasure est largement insensible aux conditions concrètes de brasage, qui peuvent ainsi varier assez largement.

Des exemples antérieurs de cette composition de brasure sont donnés dans EP-A-0 100 835 et US-A-3 813 759, mais toujours pour unir des pièces en carbure de silicium, c'est-à-dire en matière aux propriétés différentes et pour laquelle l'emploi de cette composition de brasure est beaucoup plus naturel qu'avec l'invention, à cause de l'identité de leur élément de base (le silicium) qui permet d'espérer une bonne compatibilité d'ordre métallurgique ou chimique à l'endroit de l'assemblage.

Quelques exemples vont maintenant être décrits.

On a d'abord fabriqué une composition de 62% en poids de cobalt sous forme de fils et de 38% de silicium sous forme de morceaux qui furent chauffés sous vide à 1280° pendant 5 minutes dans un creuset en nitrure de bore pour fondre les constituants et donner au refroidissement des morceaux de brasure cassants qui furent pulvérisés en grains. La poudre obtenue fut mélangée à un liant organique liquide tel qu'un ciment de type Nicrobraz, et les surfaces d'alumine à joindre furent enduites de cette suspension après avoir été dégraissées et séchées. La brasure fut réalisée dans un four sous argon à 1290° pendant 5 minutes après un palier de 200° pendant 1 heure pour dégazer les pièces.

La résistance mécanique en cisaillement de la brasure était de 100 MPa.

Enfin, on entreprit de réaliser une composition de 62% de cobalt en poids sous forme de fils et de 38% de silicium sous forme de morceaux. Ces constituants furent introduits dans un creuset en nitrure de bore puis chauffés sous vide à 1290° pendant 5 minutes. On obtint des morceaux de brasure cassants qui furent pulvérisés au mortier pour donner une poudre, qui fut mélangée à un liant semblable à celui du premier exemple, et la pièce d'alumine fut enduite de cette suspension après avoir été dégraissée et séchée. Le brasage de cette pièce avec une pièce de tantale eut encore lieu sous une pression d'un bar d'argon à une température de brasage de 1290° et pendant 5 minutes après un palier de dégazage comme précédemment.

La composition de brasure peut être appliquée d'autres façons, notamment par dépôt physique en phase de vapeur, projection, décomposition thermique après métallisation, réduction chimique, évaporation et électrolyse. De même, on peut chauffer de bien des façons et éventuellement en présence d'oxygène, au moins sous pression partielle.

## Revendications

1. Utilisation d'une composition de brasure pour braser une céramique comprenant de l'alumine, composée d'un mélange de silicium et d'au moins un métal choisi parmi le cobalt, le platine, l'argent et le palladium.

2. Procédé de brasage d'une céramique comprenant de l'alumine à une autre céramique ou à un métal, caractérisé en ce qu'il consiste à appliquer une composition selon la revendication 1 entre les céramiques ou entre la céramique et le métal et à chauffer à au moins 1100°C.

3. Procédé de brasage selon la revendication 2, caractérisé en ce que le chauffage est poussé à 1200°C.

## Claims

1. Use of a brazing composition for brazing an alumina-containing ceramic, composed of a mixture of silicon and of at least one metal selected from cobalt, platinum, silver and palladium.

2. Process for brazing an alumina-containing ceramic to another ceramic or to a metal, characterized in that it consists in applying a composition according to Claim 1 between the ceramics or between the ceramic and the metal and in heating to at least 1100°C.

3. Brazing process according to Claim 2, characterized in that the heating is pushed to 1200°C.

## Patentansprüche

1. Verwendung einer Lötzusammensetzung zum Löten einer aluminiumoxidhaltigen Keramik, zusammengesetzt aus einer Mischung aus Silicium und wenigstens einem Metall, ausgewählt unter Kobalt, Platin, Silber und Palladium.

2. Verfahren zum Verlöten einer aluminiumoxidhaltigen Keramik mit einer anderen Keramik oder mit einem Metall,
**dadurch gekennzeichnet,**
daß es darin besteht, eine Zusammensetzung nach Anspruch 1 zwischen den Keramiken oder zwischen der Keramik und dem Metall anzubringen und auf wenigstens 1100°C zu erhitzen.

3. Lötverfahren nach Anspruch 2, dadurch gekennzeichnet, daß die Erhitzung auf 1200°C erhöht wird.
